# EUROPEAN PATENT SPECIFICATION

(11) **EP 3 062 127 B1**
(45) Date of publication and mention of the grant of the patent: **07.02.2018**
(21) Application number: 16165336.5
(22) Date of filing: 11.06.2008
(51) Int. Cl.: G01T 1/202

(54) **RADIATION IMAGE CONVERTING PANEL AND RADIATION IMAGE SENSOR**
STRAHLUNGSBILDWANDLER UND STRAHLUNGSBILDSENSOR
PANNEAU DE CONVERSION D'IMAGE DE RAYONNEMENT ET CAPTEUR D'IMAGE DE RAYONNEMENT

(30) Priority: 15.06.2007 US 812233; 23.10.2007 US 976323
(43) Date of publication of application: 31.08.2016
(62) Divisional of application: 08010626.3
(73) Proprietor: HAMAMATSU PHOTONICS K.K., Hamamatsu-shi Shizuoka 435-8558 (JP)
(72) Inventor: OHBAYASHI, Yasushi, Hamamatsu-shi, Shizuoka 435-8558 (JP); SUZUKI, Takaharu, Hamamatsu-shi, Shizuoka 435-8558 (JP); KUSUYAMA, Yutaka, Hamamatsu-shi, Shizuoka 435-8558 (JP); YAMASHITA, Masanori, Hamamatsu-shi, Shizuoka 435-8558 (JP); SHIRAKAWA, Kazuhiro, Hamamatsu-shi, Shizuoka 435-8558 (JP); TAKABAYASHI, Toshio, Hamamatsu-shi, Shizuoka 435-8558 (JP)
(74) Representative: Grünecker Patent- und Rechtsanwälte PartG mbB

(56) References cited:
- DE-A1-102006 022 138
- US-A1- 2003 001 101
- US-A1- 2007 122 544

## Description

### BACKGROUND OF THE INVENTION

### Field of the Invention

The present invention relates to a radiation image converting panel that converts a radiation image used for medical or industrial radiography or the like to an optical image.

### Related Background Art

Conventionally, X-ray sensitive films have been used for medical or industrial radiography, however, radiation imaging systems using radiation detectors have become widespread from the aspects of convenience and storage stability of radiographic results. In such a radiation imaging system, two-dimensional image data by radiation is obtained as an electrical signal by the radiation detector, and this signal is processed by a processor and displayed on a monitor.

As a typical radiation detector, a radiation detector exists, having a structure for which a radiation image converting panel (hereinafter, referred to as a "scintillator panel") with a scintillator to convert radiation to a visible light formed on a substrate made of aluminum, glass, fused silica or the like is formed, and this is combined with an image pickup device. In this radiation detector, the scintillator converts radiation that is made incident to an optical image (not always of a visible light) in a wavelength range detectable by the image pickup device, and the image pickup device detects the optical image.

As scintillator panels structured as such, scintillator panels disclosed in International Publications WO 00/63722, WO 02/23219 A1, WO 02/23220 A1, etc., have been known. The scintillator panel disclosed in WO 00/63722 is one for which, on a radiation-transmissive substrate, a thin reflective metal film and a protective film are laminated, and a scintillator is deposited. The scintillator panel disclosed in WO 02/23219 A1 is one for which provided on a heat-resisting radiation-transmissive substrate is a dielectric multilayer film, and thereon a scintillator is deposited. The scintillator panel disclosed in WO 02/23220 A1 is one for which provided on a light-transmissive substrate is a dielectric multilayer film, and thereon a scintillator is deposited, and provided on either one or both of an interface between the dielectric multilayer film and light-transmissive substrate and a surface of the light-transmissive substrate opposite to the dielectric multilayer film is a light incidence/reflection inhibiting member that inhibits incidence/reflection of an unnecessary light. In these scintillator panels, radiation that has been transmitted through the substrate is made incident into the scintillator, converted to an optical image, and outputted from a surface thereof opposite to the incident surface of radiation, and a reflecting material provided between the scintillator and substrate reflects light emitted from the scintillator toward the substrate, whereby a radiation image with a high intensity can be obtained.

In the radiation image converting panels disclosed in JP 2006- 113007A and H4-118599A, a photostimulable phosphor is formed on an aluminum substrate having a surface formed with an aluminum oxide layer. US 2007/122544 A1 relates to a method of stabilizing a storage phosphor panel. US 2003/001101 A1 relates to a scintillator panel and a radiation image sensor.

### SUMMARY OF THE INVENTION

In the scintillator panels described above, the higher the reflectance of the reflector, the higher the intensity of a radiation image can be obtained. In the case of a dielectric multilayer film, a high reflectance can be realized by increasing the number of layers thereof.

In recent years, scintillator panels have been increased in size in application to chest radiography and the like, however, it is difficult in terms of mass production to laminate multiple layers of dielectric films with a uniform film thickness on such large-sized panels, and this causes an increase in the manufacturing cost. In addition, for obtaining a radiation image with a high intensity while inhibiting the amount of radiation exposure, it is desirable to reduce a loss due to absorption by the substrate etc., until radiation reaches the scintillator to the minimum, so that it is preferable to provide the substrate etc., as thin as possible. The more the substrate etc., is increased in size to become thinner, the more difficult it becomes to form multilayered dielectric films.

While the applicant has proceeded with development for mass production of a large-sized thin scintillator panel, the inventors have discovered in the course of development that a warp on the order of a few millimeters to a few tens of millimeters can occur to the substrate as a result of a scintillator formation when the substrate is thinned and increased in size. It was found that, when a warp occurred as such, an inorganic material that forms the dielectric film is low in resistance to deformation produced by this warp since this is poor in flexibility, elasticity, and ductility, and if the dielectric film layer is thickened, an inconvenience such that a crack is produced in the dielectric film occurs.

Furthermore, when an image sensor is adhered to the scintillator panel to form a radiation image sensor, it is necessary to flatten an adhering surface of the scintillator panel, and if such a warp as mentioned above has occurred in the scintillator panel, applying a stress to eliminate the warp results in a repeated stress application to the substrate, which makes a crack more likely to occur.

On the other hand, in the above-mentioned radiation image converting panel, however, the aluminum oxide layer has a low reflectance for the light emitted from a scintillator or a phosphor such as photostimulable phosphor, whereby the radiation image converting panel with the aluminum oxide layer may fail to attain a sufficiently high luminance. Also, cracks, pinholes, and the like may be formed in the aluminum oxide layer by the heat generated when vapor-depositing the scintillator or photostimulable phosphor onto the aluminum substrate, for example. As a result, the aluminum substrate and an alkali halide scintillator or photostimulable phosphor may react with each other, thereby corroding the aluminum substrate. Though resistant against the corrosion, the aluminum oxide layer may corrode by reacting with the scintillator. The corrosion affects resulting images. Even if only a minute point is corroded, the reliability of a captured image utilized for an image analysis will deteriorate. The corrosion may increase as time passes. While the radiation image converting panel is required to have uniform luminance and resolution characteristics within the substrate surface, the substrate is harder to manufacture as it is larger in size.

It is therefore an object of the present invention to provide a large-sized and thin radiation image converting panel and radiation image sensor which allow obtaining a radiation image with a high intensity and can be easily mass-produced.

In order to achieve the above object, for a radiation image converting panel not according to the present invention, in a radiation image converting panel including a converting portion that converts a radiation image to an optical image on a support, the support includes: (1) a metal reflector; and (2) a dielectric film mirror including at least a first dielectric layer which is in contact with the metal reflector and formed thereon and a second dielectric layer which is formed on the first dielectric layer and has a higher refractive index than that of the first dielectric layer to light of an optical image outputted from the converting portion, and the converting portion is formed on the dielectric film mirror side.

According to the inventor's knowledge, when combining a plurality of dielectric films different in the refractive index to compose a mirror, in the case of two layers, the refractive index as a whole becomes higher if a layer lower in the refractive index is provided as a first layer with reference to the side opposite to a light incident surface and thereon a layer higher in the refractive index than the first layer is laminated as the second layer. By employing such construction as in the above, a high light reflectance can be obtained even with a small number of layers, and not only can lamination be favorably performed even when the substrate is thin, but occurrence of a crack in the dielectric layers can also be prevented even when the substrate has been warped in a subsequent process, and thus a radiation image with a high intensity can be obtained, and mass production thereof also becomes easier.

The radiation image converting panel according to the present invention is defined in claim 1. Further advantageous embodiments are defined in the dependent claims.

If a scintillator composed of a plurality of needle crystals is used as the converting portion, the scintillator panel according to the present invention can be realized.

It is preferable that the first dielectric layer contains SiO₂, and the second dielectric layer contains at least one material from TiO₂, Nb₂O₅, Ta₂O₅, HfO₂, and ZrO₂. Since SiO₂ is lower in the refractive index than any of TiO₂, Nb₂O₅, Ta₂O₅, HfO₂, and ZrO₂ and also has a large difference in the refractive index, a high reflectance can be realized.

More preferably, the dielectric film mirror is formed by laminating three or more layers of the first dielectric layer and the second dielectric layer alternately. By laminating three or more layers, the reflectance can be further improved.

However, when the number of laminations is increased, although the reflectance is improved, the difficulty in lamination is increased as described above, and resistance to a warp that can possibly be produced in a subsequent process is also lowered, and thus in consideration of simultaneous pursuit of a high reflectance and mass producibility, the number of laminations of the dielectric film mirror is 10 layers or less, or the film thickness thereof as a whole is 1 µm or less.

The scintillator panel may further include a transparent organic film which is formed, on the dielectric film mirror, at least between the same and the scintillator, and has a lower refractive index than that of the second dielectric layer to light emitted by the scintillator. By such configuration, not only is the dielectric film mirror protected by the transparent organic film, but an effect to further improve the light reflectance can also be obtained.

As the metal reflector, a thin metal film or a metal substrate can be used, and when the metal reflector is a thin metal film, handling thereof becomes easy if the scintillator panel further includes a supporting substrate that supports the metal reflector. If these types of metal reflectors are formed of aluminum, silver, or gold, since the light reflectance of the reflectors themselves can be increased, the light reflectance as a whole is improved, which is preferable.

### BRIEF DESCRIPTION OF THE DRAWINGS

Fig. 1 is a partially broken perspective view showing a configuration of a first illustrative example of a scintillator panel an example not covered by the present invention, Fig. 2 is a sectional view along a line II-II thereof, and Fig. 3 is an enlarged view of a part III of Fig. 2;
Fig. 4 is a graph showing an emission spectrum of a typical scintillator CsI (Tl) and a spectral sensitivity spectrum of a typical image sensor;
Fig. 5 is a schematic view showing a configuration of a radiation image sensor and Fig. 6 is a sectional view showing another configuration;
Fig. 7 is a sectional view showing a configuration of a scintillator panel to be a comparative example, not covered by the present invention, and Fig. 8 is a graph showing wavelength characteristics of light reflectance at an interface of the scintillator panel;
Fig. 9A is a view showing a lamination order of a dielectric layer in a scintillator panel and Fig. 9B is a view showing a lamination order of a dielectric layer in the comparative example, not covered by the present invention;
Fig. 10 is a graph showing wavelength characteristics of light reflectance of the dielectric layer shown in Fig. 9A, and Fig. 11 is a graph showing wavelength characteristics of light reflectance of the dielectric layer shown in Fig. 9B;
Fig. 12 is a graph showing wavelength characteristics of light reflectance in cases with and without an organic film provided on the surface of the dielectric layer shown in Fig. 9A;
Fig. 13 is a graph showing wavelength characteristics of light reflectance in cases where the substrate is made of aluminum in the scintillator panel having the configuration shown in Fig. 9A, and Fig. 14 is a graph showing wavelength characteristics of light reflectance in cases where the substrate is made of glass;
Fig. 15 is a sectional view showing a configuration of a second illustrative example of a scintillator panel and Fig. 16 is an enlarged view of a part XVI thereof;
Fig. 17 to Fig. 19 are sectional views showing respective configurations of third to fifth illustrative examples not covered by the present invention of a scintillator panel.
Fig. 20 is a partly broken perspective view schematically showing a scintillator panel in accordance with a sixth embodiment, and Fig. 21 is a sectional view taken along the line XXI-XXI thereof;
Figs. 22 and 23 are graphs showing examples of AES spectrum in the scintillator panel in accordance with the sixth embodiment, Fig. 22 shows that of the aluminum oxide layer, and Fig. 23 shows that of the metal film;
Figs. 24A to 24C and 25A to 25D are process sectional views schematically showing an example of the method of manufacturing a scintillator panel not covered by the present invention;
Fig. 26 is a view showing another example of radiation image sensor including the scintillator panel in accordance with the sixth embodiment;
Figs. 27 and 28 are sectional views each schematically showing the scintillator panel in accordance with a seventh and eighth embodiment;
Fig. 29 is a cross-sectional SEM photograph of an example of the scintillator panel in accordance with the eighth embodiment;
Figs. 30 to 32 are sectional views each schematically showing the scintillator panel in accordance with a ninth to eleventh embodiment.

### DESCRIPTION OF THE PREFERRED EMBODIMENTS

Hereinafter, preferred embodiments of the present invention will be described in detail with reference to the accompanying drawings. To facilitate the comprehension of the explanation, the same reference numerals denote the same parts, where possible, throughout the drawings, and a repeated explanation will be omitted. In addition, dimensions in the respective drawings have been overdrawn in part for the sake of description, and are not always coincident with those in reality.

### (First Illustrative Example)

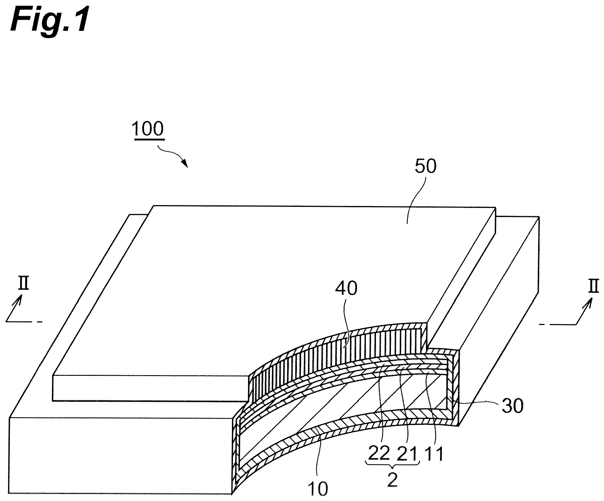

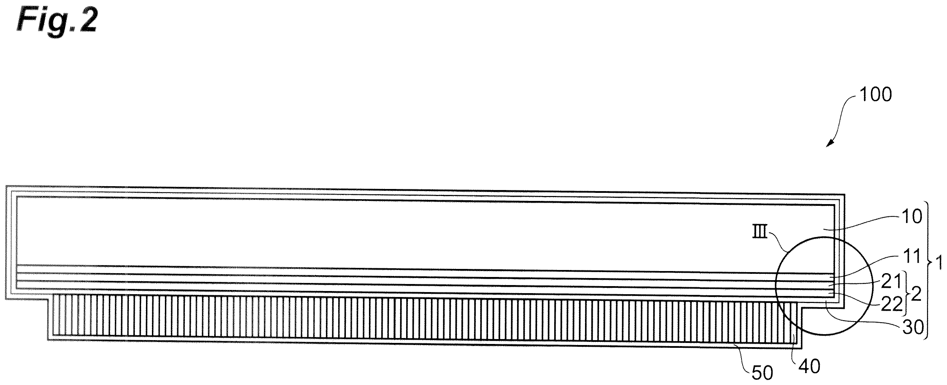

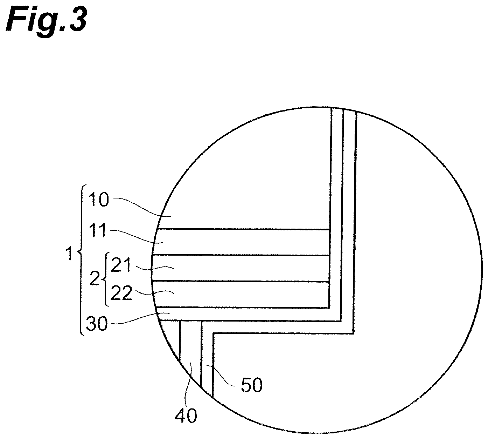

Fig. 1 to Fig. 3 show a configuration of a first illustrative example of a radiation image converting panel. The present example is a scintillator panel using a scintillator as a converting portion of a radiation image and is therefore also a preferred example of a scintillator panel. Fig. 1 is a partially broken perspective view thereof, Fig. 2 is a sectional view along a line II-II thereof, and Fig. 3 is an enlarged view of a part III of Fig. 2. This scintillator panel 100 is used for chest radiography and the like, and has a large size of, for example, 450mmx450mm. As its configuration, a metal reflection film 11 made of aluminum, a SiO₂ film 21, and a TiO₂ film 22 are laminated on one of the surfaces of an aluminum substrate 10. And, all of these including the aluminum substrate 10 are covered by a reflection protective film 30 to form a support 1. A needle-shaped scintillator 40 is provided on the surface of the reflection protective film 30 on the TiO₂ film 22 of the support 1, and further, the whole is covered by a moisture-resistant protective film 50.

The aluminum substrate 10 functions as a supporting substrate that supports the whole. When the thickness of the aluminum substrate 10 is less than 0.3mm, the scintillator 40 tends to become easily peeled off due to curving of the aluminum substrate 10. On the other hand, when the thickness of the aluminum substrate 10 exceeds 1.0mm, its radiation transmittance tends to decline. In order to secure intensity of radiation that is transmitted through this aluminum substrate 10 and made incident into the scintillator 40 while reliably forming the scintillator 40 on the substrate, it is preferable to provide the thickness of the aluminum substrate 10 as 0.3mm or more and 1.0mm or less.

As the metal reflection film 11, a thin film of gold, silver, aluminum, or the like can be used. The aluminum substrate 10 is usually formed by rolling, striped streaks are formed in the rolling process, and it is difficult to completely remove the streaks even by subsequent polishing. When the thickness of the metal reflection film 11 is less than 50nm, unevenness tends to occur on the reflection surface under the influence of the stripes. On the other hand, when the thickness thereof exceeds 200nm, its radiation reflectance tends to decline. In consideration of balance between the light reflectance of the metal reflection film 11 and intensity of radiation made incident into the scintillator 40, it is preferable to provide the thickness of the metal reflection film 11 as 50nm or more and 200nm or less. In the present example, a thin aluminum film with a thickness of 70nm is used, however, this may be analyzed as an incomplete aluminum oxide by an AES analysis (Auger Electron Spectroscopy).

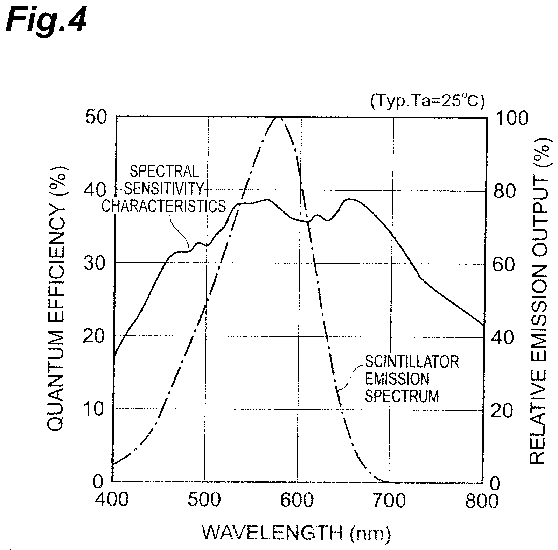

Both of the SiO₂ film 21 and the TiO₂ film 22 compose a dielectric film mirror 2. Fig. 4 is a graph showing an emission spectrum of the scintillator 40 of the present example and spectral sensitivity characteristics of a MOS-type image sensor (C7921, manufactured by Hamamatsu Photonics K.K.), used in combination with the scintillator panel 100, for obtaining an optical image. As shown in this graph, since the emission spectrum of the scintillator 40 has a central emission wavelength around 560nm, it is necessary for the dielectric film mirror 2 to have a high reflectance in a range centered on this wavelength. As for the refractive index to light with a wavelength of 560nm, SiO₂ is 1.46 and TiO₂ is 2.29, and thus the refractive index of the TiO₂ film 22 being the second layer is higher than the refractive index of the SiO₂ film being the first layer. Since it is sufficient to set the film thickness of both so that its optical film thickness becomes λ/4 where a central wavelength of light to be reflected is provided as λ, it is sufficient to set the thickness of the SiO₂ film 21 to 95nm and the thickness of the TiO₂ film to 60nm. When a constituent of the scintillator 40 to be described later makes contact with the metal reflection film 11, this can cause erosion of the metal reflection film 11. The SiO₂ film 21 and TiO₂ film 22 existing between the metal reflection film 11 and scintillator 40 prevents contact of the constituent of the scintillator 40 with the metal reflection film 11, and also has a function to prevent erosion and deterioration thereof.

The reflection protective film 30 has a function to further prevent erosion and deterioration of the metal reflection film 11 due to the constituent of the scintillator 40. The SiO₂ film 21 and TiO₂ 22 described above are formed by vapor deposition as will be described later, and fine pinholes may occur at that time. In such a case, if the scintillator 40 is formed directly on the TiO₂ film 22, a constituent of the scintillator 40 reaches the metal reflection film 11 through the fine pinholes existing in the SiO₂ film 21 and TiO₂ film 22 to cause erosion and deterioration thereof. In the present example, the reflection protective film 30 exists, so that even when pinholes have occurred at the time of a dielectric film formation, these openings can be effectively blocked to effectively inhibit the constituent of the scintillator 40 from reaching the metal reflection film 11. In addition, this can also efficiently inhibit the constituent of the scintillator 40 from reaching the metal reflection film 11 from the lateral side of the aluminum substrate 10.

On the other hand, since the scintillator 40 is generally formed of a deliquescent material, when the scintillator 40 is formed of such a deliquescent material, it is desirable to seal the scintillator 40 by the moisture-resistant protective film 50.

As the reflection protective film 30 and moisture-resistant protective film 50, an organic film or an inorganic film can be used, and different materials or the same material may be used. In the present example, both films 30 and 50 are made from, for example, polyparaxylylene, but may be made from a xylylene-based material such as polymonochloroparaxylylene, polydichloroparaxylylene, polytetrachloroparaxylylene, polyfluoroparaxylylene, polydimethylparaxylylene, or polydiethylparaxylylene. Alternatively, the reflection protective film 30 and moisture-resistant protective film 50 may be made from, for example, polyurea, polyimide, or the like, or may be made from an inorganic material such as LiF, MgF₂, SiO₂, Al₂O₃, TiO₂, MgO, or SiN. Further alternatively, these may be formed in combination of an inorganic film and an organic film. In the present example, the thickness of each protective film 30, 50 is 10µm. The protective film 30 has a refractive index to light with a wavelength of 560nm of 1.64, which is lower than the refractive index of the TiO₂ 22 being the second layer and higher than the refractive index of the SiO₂ film 21 being the first layer.

The scintillator 40 is smaller than the aluminum substrate 10 when viewed from the thickness direction of the aluminum substrate 10. In other words, the scintillator 40 is formed not on the whole of a scintillator 40 forming surface of the aluminum substrate 10 but in a partial region on the surface. The region of the surface of the aluminum substrate 10 formed with the scintillator 40 may be surrounded by regions formed without the scintillator 40 on four sides, however, regions formed without the scintillator 40 may exist only at three or two sides thereof and the scintillator 40 may be formed up to the ends of the substrate 10 on the other sides.

The scintillator 40 is made of, for example, a phosphor that converts radiation to a visible light, and is composed of CsI columnar crystals or the like doped with Tl, Na, or the like. The scintillator 40 has a construction bristled with a plurality of needle crystals. The scintillator 40 may be made of NaI doped with Tl, KI doped with Tl, or LiI doped with Eu. Alternatively, the scintillator 40 may be of a type that emits infrared or ultraviolet light other than visible light. The thickness of the scintillator 40 is preferably 100µm to 1000µm, and more preferably, 450µm to 550µm. The average needle diameter of the needle crystals that compose the scintillator 40 is preferably 3µm to 10µm.

Next, description will be given of a manufacturing process of this scintillator panel 100. First, the aluminum substrate 10 is prepared. Next, on this aluminum substrate 10, the metal reflection film 11 is formed by a vacuum vapor deposition method. Subsequently, the SiO₂ film 21 and TiO₂ film 22 are laminated similarly by a vacuum vapor deposition method. Then, the reflection protective film 30 is formed by a CVD method so as to seal the aluminum substrate 10, the metal reflection film 11, and the dielectric film mirror 2 as a whole. Subsequently, by a vapor deposition method, the scintillator 40 is formed at a predetermined position on the reflection protective film 30. Next, the moisture-resistant protective film 50 is formed by a CVD method so as to seal the whole of the aluminum substrate 10, the metal reflection film 11, and dielectric film mirror 2 sealed by the reflection protective film 30 and the scintillator 40 formed thereon altogether. In this manner, the scintillator panel 100 is manufactured. Here, sealing of the protective film 30, 50 can be realized by making the opposite surface side of the aluminum substrate 10 to the scintillator forming surface float up from a substrate holder that supports the substrate in the apparatus at the time of CVD. Such methods include a method described in, for example, the specification of United States Patent No. 6,777,690. According to this method, pins are used to float the aluminum substrate 10. In this case, no protective film is formed on a minute contact surface between the aluminum substrate 10 and pins.

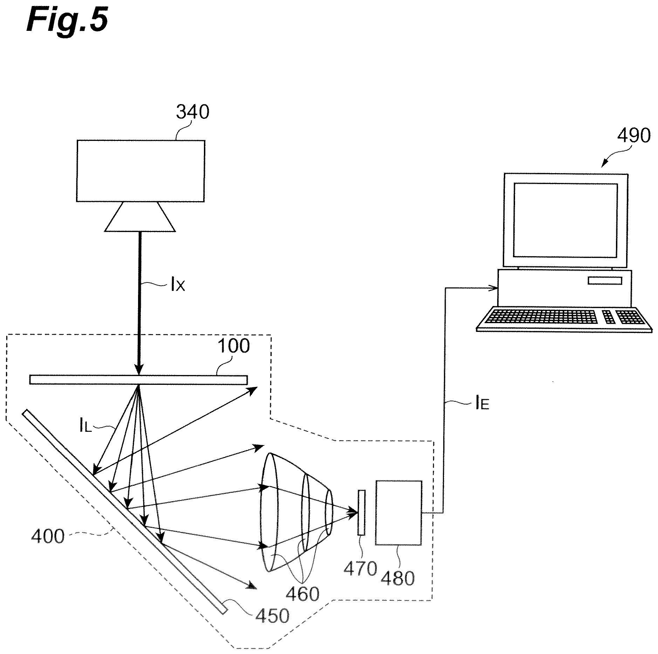

Next, we will describe actions and effects of this scintillator panel 100. This scintillator panel 100 is used as a part of a radiation image sensor. Fig. 5 is a schematic configuration view showing one example (first example) of a radiation image sensor (a radiation image sensor using this scintillator panel.

This radiation image sensor 400 includes the scintillator panel 100 and an image pickup device 470 that converts an optical image I_{L} emitted from the scintillator 40 of the scintillator panel 100 to an electrical signal I_{E}. Between the image pickup device 470 and the scintillator panel 100, arranged is a mirror 450 and a lens 460 as a reducing optical system that demagnifies an optical image I_{L} and guides the image to an imaging plane of the image pickup device 470. The reducing optical system is not limited to the illustrated construction but may be composed only of either the mirror or lens, and the mirror and lens may be either a single or a plurality of mirrors and lenses. In addition, a prism and other optical components may be used besides the mirror and lens.

To describe the case of chest radiography for example, located as a subject is a reagent (not shown) between the surface (hereinafter, referred to as a "radiation input surface") of the scintillator panel 100 on the side where the scintillator 40 has not been formed and a radiation source 340. Radiation emitted from the radiation source 340 toward the reagent partially passes through the reagent, and an obtained radiation image I_{X} is made incident into the radiation input surface of the scintillator panel 100.

The radiation made incident into the scintillator panel 100 passes through the moisture-resistant protective film 50, reflection protective film 30, the aluminum substrate 10, the metal reflection film 11, the dielectric film mirror 2, and the reflection protective film 30, and is made incident into the scintillator 40. The scintillator 40 emits visible light according to the radiation made incident. Thereby, a visible optical image I_{L} according to the radiation image I_{X} is generated.

A part of the visible light emitted from the scintillator 40 passes through the moisture-resistant protective film 50 and is outputted from the surface (hereinafter, referred to as a "optical image output surface") of the scintillator panel 100 on the side opposite to the radiation input surface. In addition, a part is outputted in the opposite direction, that is, to the dielectric film mirror 2 side, but is reflected by the reflection protective film 30, the dielectric film mirror 2, and the metal reflection film 11 to return to the scintillator 40 side, and is finally outputted from the optical image output surface after passing through the scintillator 40 and the moisture-resistant protective film 50.

Since the scintillator panel 100 of the present example employs the thin aluminum substrate 10, this allows securing intensity of radiation made incident into the scintillator 40 to obtain a radiation image (in actuality, the optical image I_{L} corresponding to the radiation image I_{X}) with a high intensity. In addition, since light emitted from the scintillator 40 is effectively guided by the reflection protective film 30, the dielectric film mirror 2, and the metal reflection film 11 to the optical image output surface to be outputted, intensity of the output optical image can be further increased. Since this allows obtaining an optical image corresponding to a radiation image with a sufficient intensity even when the intensity of light made incident is low, the amount of radiation made incident into the subject can be reduced, and an effect to lower the amount of radiation exposure of the subject can also be obtained.

The optical image I_{L} outputted from the scintillator panel 100 is demagnified by the mirror 450 and the lens 460 and is guided to the imaging plane of the image pickup device 470. As the image pickup device 470, besides, for example, a solid-state image pickup device such as a CCD (Charge-Coupled Device) or a CMOS (Complementary Metal Oxide Semiconductor) device, a pickup tube or the like can be used. The image pickup device 470 outputs the electrical signal I_{E} according to the optical image I_{L} made incident from the imaging plane. The outputted electrical signal I_{E} is sent to an analyzing workstation 490 through an electronic device 480, and is applied with a predetermined processing to display an image onto a display or accumulate/store image information onto a storage device such as hard disk. The electrical signal I_{E} corresponding to the image may be sent as an analog signal to the workstation 490 or may be converted to a digital signal by the electronic device 480 or the image pickup device 470 itself. The electronic device 480 may apply, without limitation to digitization, other processes to the obtained electrical signal I_{E}. In addition, the electronic device 480 may control operation of the image pickup device 470. In the present embodiment, using the reducing optical system provides an advantage that a small-sized image pickup device can be used as the image pickup device 470.

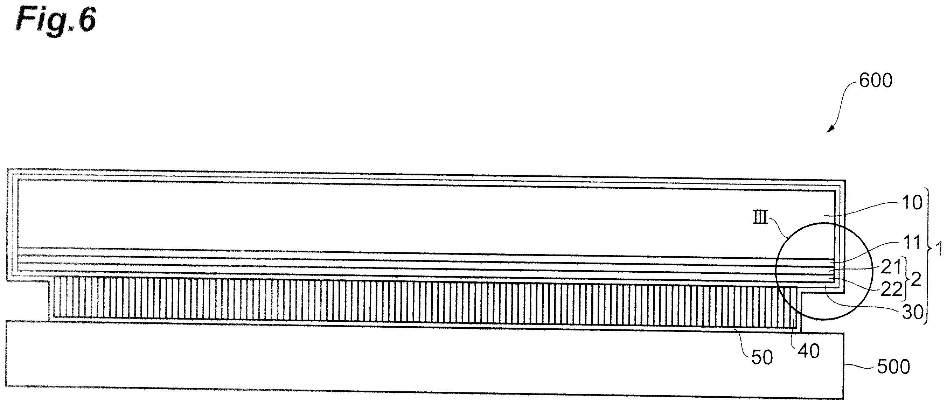

The radiation image sensor using the scintillator panel 100 of the present example is not limited to the example mentioned above. Fig. 6 is a sectional view showing a configuration of another radiation image sensor using the scintillator panel 100 of the present example. A radiation image sensor 600 of this example includes the scintillator panel 100 and an image pickup device 500 which is arranged in a manner opposed thereto and converts light outputted from the scintillator 40 of the scintillator panel 100 to an electrical signal. Here, the optical image output surface of the scintillator panel 100 is arranged on the imaging plane side of the image pickup device 500 side. That is, the scintillator 40 is arranged between the image pickup device 500 and the substrate 10. The scintillator panel 100 and the image pickup device 500 may be joined or may not be joined to each other. In addition, it is not always necessary that these are in contact, and these may be arranged apart. When both are joined, these may be joined by an adhesive, or an optical coupling material (refractive index matching material) may be used to lower a light loss so that emitted light is efficiently guided to the imaging plane of the image pickup device 500 in consideration of the refractive indices of the scintillator 40 and the protective film 50. In addition, both may be mechanically combined by use of an unillustrated fixing member.

Similar to the radiation image sensor of the first example, in the present example as well, a radiation image made incident from the radiation input surface is converted to an electrical signal by being made incident into the scintillator 40, is converted to an optical image, and is guided to the image pickup device 500. By guiding this electrical signal to an unillustrated analyzing device, a display, accumulation/storage, or the like can be performed, and the same effects as those of the radiation image sensor of the first example can be obtained. In the present example, since the scintillator panel 100 and the image pickup device 500 can be integrated, handling thereof becomes easy, and there is also an advantage that omitting an optical system makes an adjustment easy.

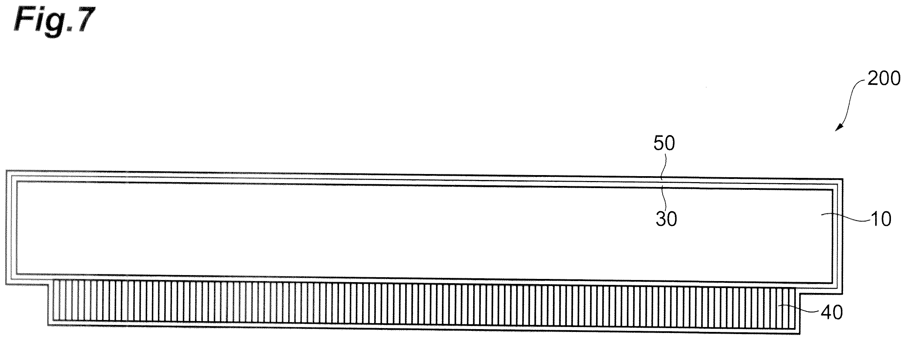

Next, we will describe verification results of the difference in effects depending on the existence of the dielectric film mirror 2 of the scintillator panel 100 of the present example. Fig. 7 is a sectional view showing a configuration of a scintillator panel 200 to be a comparative example. This scintillator panel 200 has a configuration provided by sealing the aluminum substrate 10 by the protective film 30, forming the scintillator 40 on one of the surfaces thereof, and covering the whole by the moisture-resistant protective film 50 while excluding the metal reflection film 11 and the dielectric film mirror 2 from the scintillator panel 100 according to the present example, and other aspects of the configuration are the same as those of the scintillator panel 100.

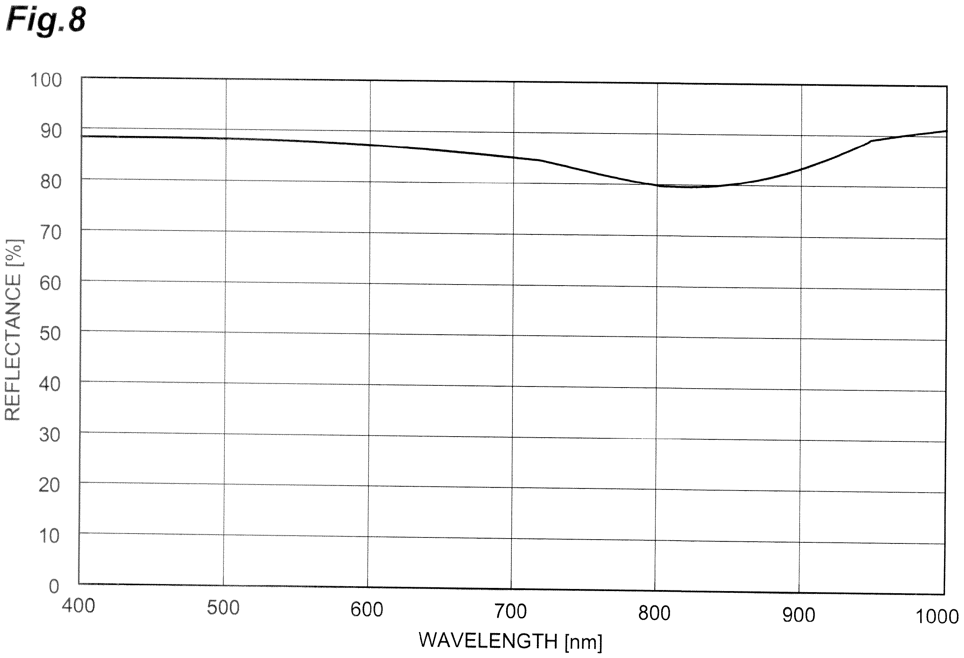

Fig. 8 is a graph showing a spectral reflectance at the scintillator 40 forming surface of the substrate 10 and the protective film 30 viewed from the scintillator 40 side in the scintillator panel 200 of Fig. 7. It can be understood that there is an absorption loss of slightly over 10% although the surface has a reflectance of 80% to 90% from the visible light region to the near-infrared light region.

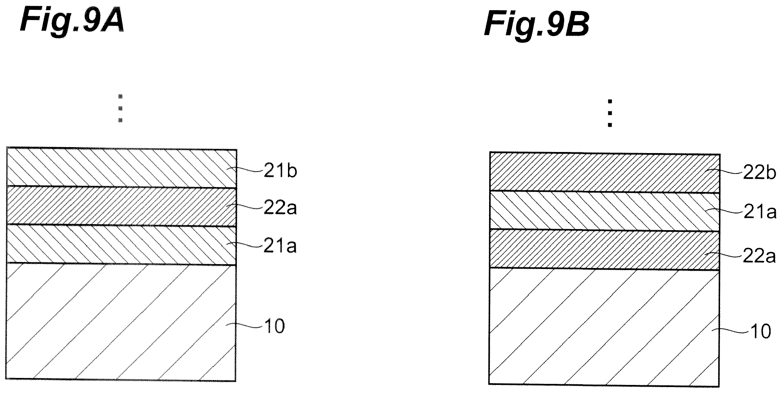

Next, we will describe the case where the dielectric film mirror 2 is provided. Fig. 9A and Fig. 9B show dielectric mirror parts of scintillator panels, where both of these employ a construction of the SiO₂ film 21 and the TiO₂ film 22 alternately laminated on the aluminum substrate 10, and these are different only in the lamination order thereof. In the dielectric mirror shown in Fig. 9A, as in the scintillator panel 100 according to the present example, a SiO₂ film 21a with a low refractive index is provided as a first layer on the aluminum substrate 10 and a TiO₂ film 22a with a high refractive index is thereon provided as a second layer, and this is then repeated. On the other hand, in the dielectric mirror shown in Fig. 9B, contrary thereto, a TiO₂ film 22a with a high refractive index is provided as a first layer on the aluminum substrate 10 and a SiO₂ film 21a with a low refractive index is thereon provided as a second layer, and this is then repeated.

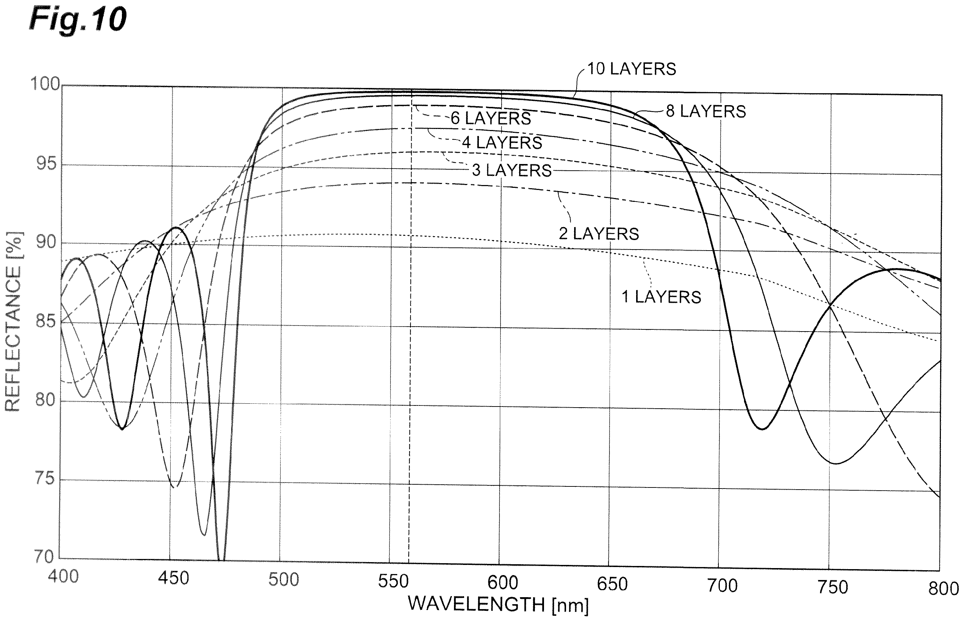

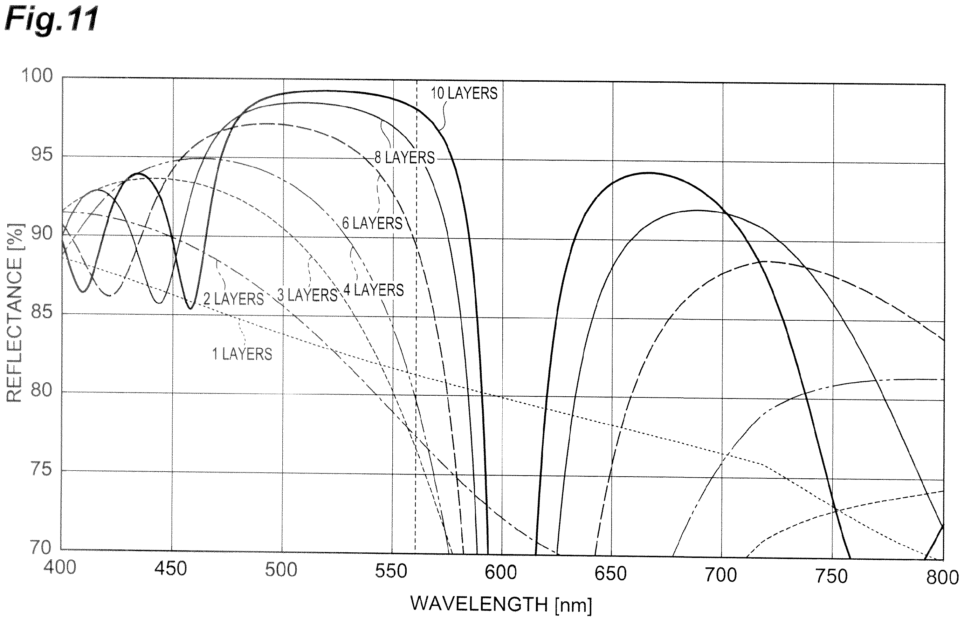

Fig. 10 and Fig. 11 show spectral reflectances in cases of the respective constructions of Fig. 9A and Fig. 9B. According to the construction of Fig. 9A, a reflectance of nearly 95% can be obtained even when the dielectric mirror is composed of two layers as in the present example, the reflectance exceeds 99% with six layers, and a reflectance of 99.8% is obtained with ten layers. According to the construction of Fig. 9B, a phenomenon of a great depression of the reflectance is recognized around 600nm. In the emission spectrum of the scintillator 40 (see Fig. 4), the amount of energy in this region where the reflectance is depressed is not negligible, so that the intensity of an optical image to be obtained becomes lower than that of the construction of Fig. 9A.

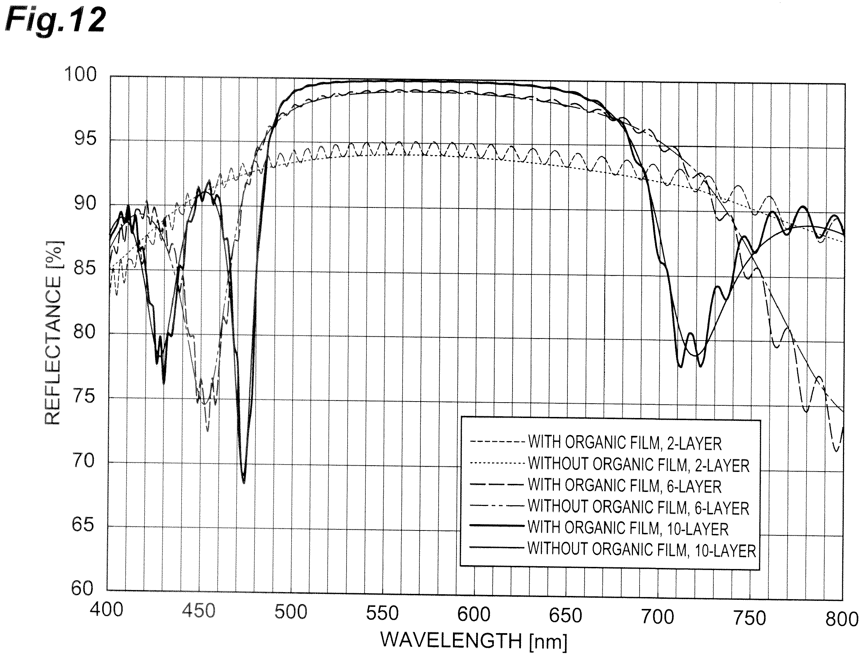

Fig. 12 is a graph showing by comparison spectral reflectances when, in the construction of Fig. 9A, the protective film 30 is provided and not provided on the surface thereof. As shown in Fig. 12, although the reflectance has a tendency to fluctuate finely and periodically when an organic film is formed in comparison with when no organic film is provided, it can be understood that the reflectance as a whole has been improved. Table 1 shows the difference in light reflectance at a wavelength of 560nm to the number of laminations of dielectric layers in this construction.

**Table 1 Light reflectance by number of layers**

| Number of layers | Reflectance (%) |
|---|---|
| 0 | 87.75 |
| 1 | 90.00 |
| 2 | 94.61 |
| 3 | 95.69 |
| 4 | 97.76 |
| 5 | 98.21 |
| 6 | 99.08 |
| 7 | 99.27 |
| 8 | 99.63 |
| 9 | 99.71 |
| 10 | 99.85 |

It can be understood from this table that an effect to improve reflectance when the TiO₂ film serving as an even number layer was laminated is larger than the effect to improve reflectance when the SiO₂ film 21 serving as an odd number layer was laminated. Therefore, in consideration of cost performance etc., it is preferable to provide the number of laminations as an even number.

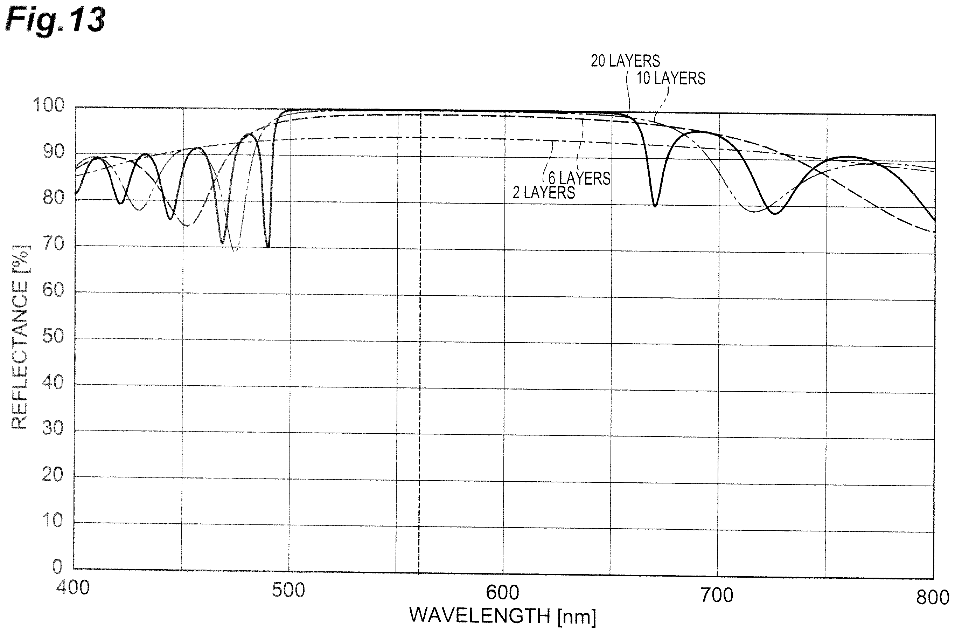

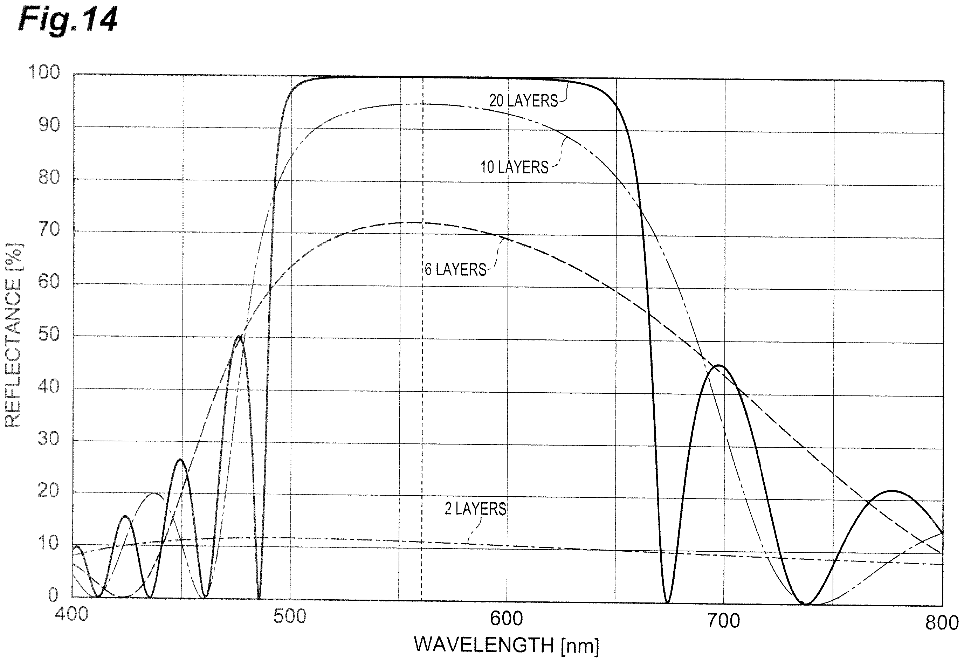

Fig. 13 and Fig. 14 are graphs showing by comparison spectral reflectances by the material of the substrate 10 in Fig. 9A. Fig. 13, which shows spectral reflectances in the case of the substrate 10 shown in Fig. 9A, is a simplified graph of Fig. 10. Fig. 14 shows spectral reflectances when the substrate 10 shown in Fig. 9 was replaced by a glass substrate. It can be understood that there is virtually no difference therebetween when the number of layers is large (20 layers), however, the spectral reflectance receives an influence of the substrate layer when the number of layers is small. Accordingly, it has been confirmed to be preferable that the first layer of the dielectric mirror is formed on a light reflection surface as shown in the present embodiment when the number of layers is small.

As has been described above, although it is preferable that the number of layers of the dielectric films is large for improving reflecting characteristics thereof, since a reflectance of nearly 95% can be obtained even with two layers and a reflectance of 99.85% can be obtained with ten layers, the effect to improve reflectance to be provided by further multilayered dielectric films is small. Meanwhile, the materials composing the dielectric films are poor in flexibility, elasticity, and ductility. During a manufacturing process of the scintillator panel 100 of the present example, a warp on the order of a few millimeters to a few tens of millimeters can occur in the substrate 10 due to a formation of the scintillator 40, however, the dielectric films are poor in resistance to distortion caused by this warp, and an inconvenience such that a crack is produced can occur. The larger the number of layers and the layer thickness of the dielectric films, the more likely a crack will occur, so that it is preferable that the thickness does not exceed approximately 1µm. Therefore, the dielectric films can realize both mass producibility and a high reflectance when these are provided on the order of ten layers or less in terms of the number of layers and at 1µm or less in terms of the thickness.

### (Second Illustrative Example)

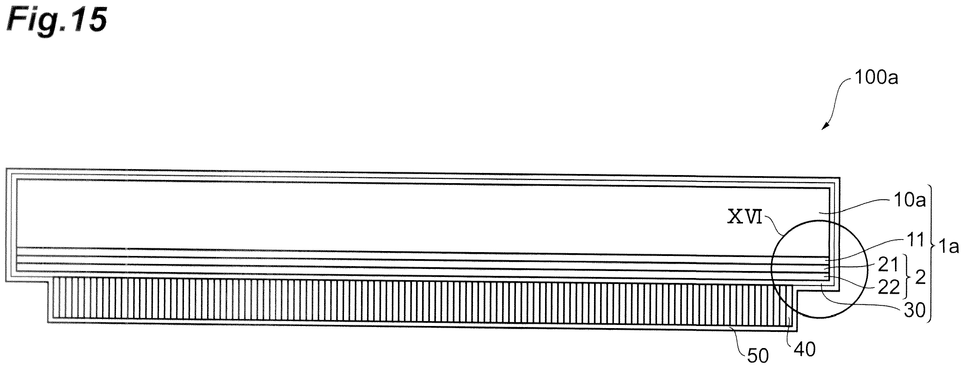

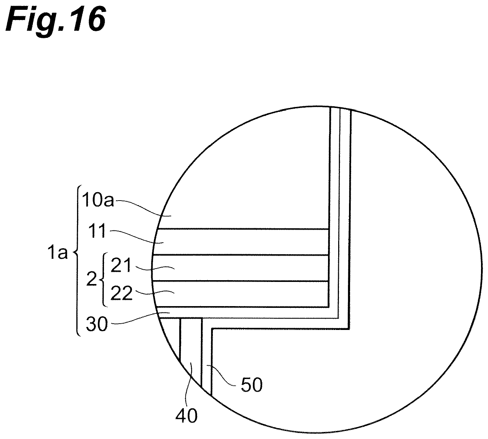

Hereinafter, we will describe some different examples of a scintillator panel. Fig. 15 is a sectional view showing a configuration of a second illustrative example of a scintillator panel and Fig. 16 is an enlarged view of a part XVI thereof. The configuration of this scintillator panel 100a is basically the same as that of the scintillator panel 100 of the first example shown in Fig. 2 and Fig. 3, and differs only in the point that an amorphous carbon substrate 10a is used in a support 1a in place of the aluminum substrate 10. In the amorphous carbon substrate 10a as well, for the same reason as that of the first example, it is preferable to provide the thickness as 0.3mm or more and 1.0mm or less. In this example as well, an optical image with a high intensity can be obtained as in the first example. Since the amorphous carbon substrate has a higher radiation transmittance than that of the aluminum substrate, a more satisfactory optical image can be obtained.

### (Third Illustrative Example)

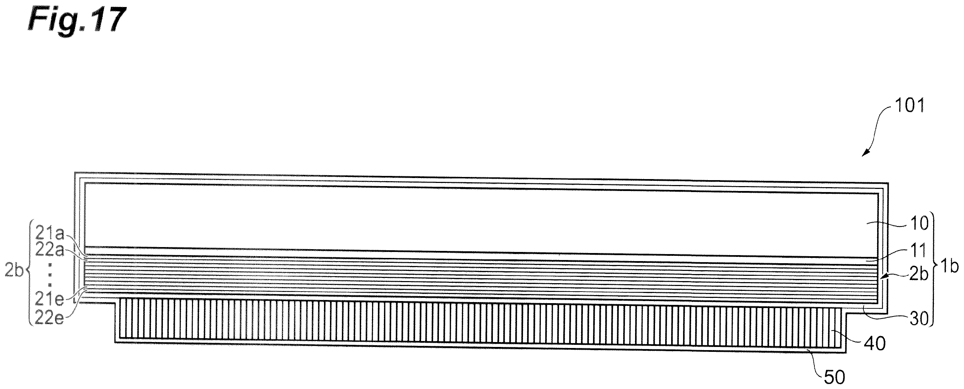

Fig. 17 is a sectional view showing a configuration of a third illustrative example of a scintillator panel. This scintillator panel 101 differs only in the point that a ten layered dielectric film mirror 2b is used in place of the dielectric film mirror 2 of the first example. As a lamination order of the dielectric film mirror 2b, as in the dielectric film mirror 2 of the first example, the SiO₂ film 21a with a low refractive index is provided as a first layer on the metal reflection film 11 and the TiO₂ film 22a with a high refractive index is thereon provided as a second layer, and then the lamination of the SiO₂ film and TiO₂ film is repeated four times. As in the first example, the thickness of the SiO₂ films 21a to 21e is 95nm, and the thickness of the TiO₂ films 22a to 22e is 60nm. According to the present example, since a reflection layer with a high reflectance of 99.85% can be realized as shown in Fig 12 and Table 1, an optical image with a higher intensity can be obtained. Meanwhile, even when more than ten dielectric layers are laminated, the improvement in reflectance is slight, and the difficulty in lamination is increased, the yield of products and the like is also lowered, and the manufacturing cost is also increased, and thus a lamination of more than ten layers is not preferable.

### (Fourth Illustrative Example)

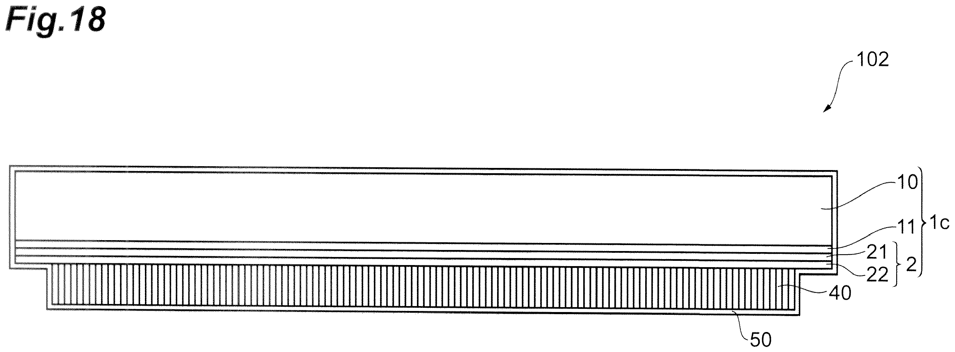

Fig. 18 is a sectional view showing a configuration of a fourth illustrative example of a scintillator panel. This scintillator panel 102 differs only in the point that the reflection protective film 30, which has been provided in the first example, is excluded from a support lc. Although it is more preferable to provide the reflection protective film 30 as in the first example in consideration of the point of protecting the metal reflection film 11 from deterioration due to the scintillator constituent and the point that the reflectance is slightly improved, the reflection protective film 30 is not an essential component. In the present example, two dielectric layers compose the dielectric film mirror 2, and since these two dielectric layers function as a protective film, deterioration of the metal reflection film 11 due to the scintillator constituent can be effectively inhibited even without the exclusive protective film 30.

### (Fifth Illustrative Example)

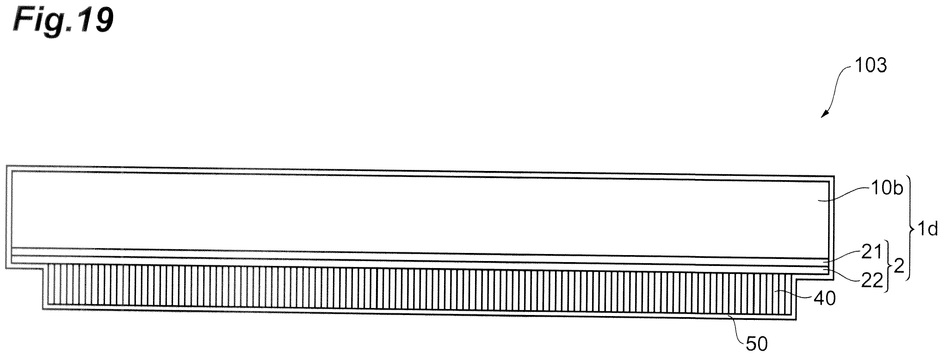

Fig. 19 is a sectional view showing a configuration of a fifth illustrative example of a scintillator panel. This scintillator panel 103 is provided by further excluding the metal reflection film 11 of a support Id from the fourth example. Smoothing the surface of the aluminum substrate 10 into a mirror surface makes it possible to provide the surface of the substrate 10 with the same function as the metal reflection film. Also, even in an incompletely mirrored state, the surface can be made to function as a reflection surface as long as a sufficient reflectance can be obtained. According to the present example, a radiation image with a high intensity can be obtained by a simple configuration. Another metal substrate whose surface has light reflectivity may be used in place of the aluminum substrate. As metals other than aluminum, for example, gold, silver, and the like can be preferably used since the reflectance is high.

### (Sixth Embodiment)

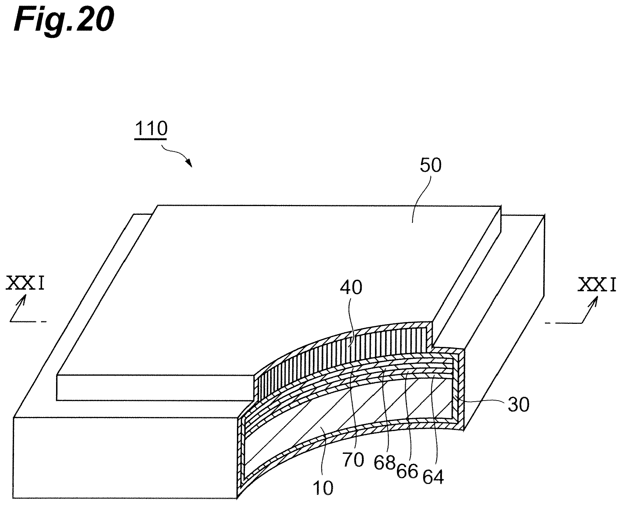

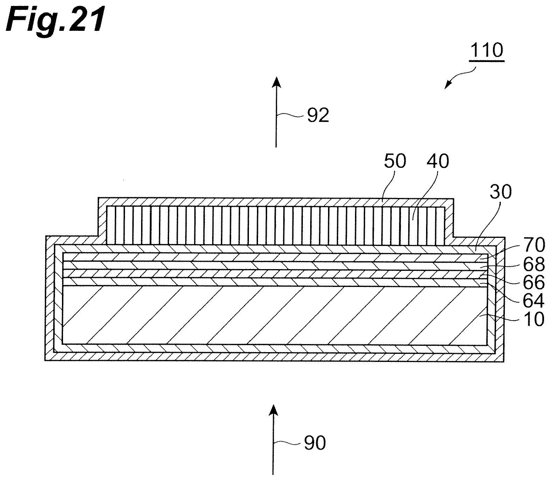

Fig. 20 is a partly broken perspective view showing a scintillator panel in accordance with a sixth embodiment. Fig. 21 is a sectional view taken along the line XXI-XXI shown in Fig. 20. As shown in Figs. 20 and 21, the scintillator panel 110 comprises an aluminum substrate 10, an aluminum oxide layer 64 formed on a surface of the aluminum substrate 10, and an intermediate film 66 which is provided on the aluminum oxide layer 64 and has a radiation transparency. The aluminum oxide layer 64 and intermediate film 66 are in close contact with each other. The scintillator panel 110 also includes a metal film 68 which is provided on the intermediate film 66 and has a radiation transparency and a light reflectivity, an oxide layer 70 covering the metal film 68 and having a radiation transparency and a light transparency, a protective film 30 covering the oxide layer 70 and having a radiation transparency and a light transparency, and a scintillator 40 (an example of a converting part adapted to convert a radiation image) provided on the protective film 30. The intermediate film 66, metal film 68, oxide layer 70, protective film 30, and scintillator 40 are in close contact with each other.

In this embodiment, the aluminum substrate 10, aluminum oxide layer 64, intermediate film 66, metal film 68, and oxide layer 70 are totally sealed with the protective film 30. The protective film 30 prevents the metal film 68 from corroding because of pinholes and the like formed in the oxide layer 70. Also, the aluminum substrate 10, aluminum oxide layer 64, intermediate film 66, metal film 68, oxide layer 70, protective film 30, and scintillator 40 are totally sealed with a protective film 50.

When a radiation 90 such as x-ray is incident on the scintillator 40 from the aluminum substrate 10 side, light 92 such as visible light is emitted from the scintillator 40. Therefore, when a radiation image is incident on the scintillator panel 10, the scintillator 40 converts the radiation image into a light image. The radiation 90 successively passes through the protective film 50, protective film 30, aluminum substrate 10, aluminum oxide layer 64, intermediate film 66, metal film 68, oxide layer 70, and protective film 30, thereby reaching the scintillator 40. The light 92 emitted from the scintillator 40 is transmitted through the protective film 50 to the outside, while passing through the protective film 30, so as to be reflected by the metal film 68 and oxide layer 70 to the outside. The scintillator panel 110 is used for medical and industrial x-ray imaging and the like.

The aluminum substrate 10 is a substrate mainly made of aluminum, but may contain impurities and the like. Preferably, the thickness of the aluminum substrate 10 is 0.3 to 1.0 mm as the first embodiment.

The aluminum oxide layer 64 is formed by anodic oxidation of aluminum, and is made of a porous aluminum oxide (i.e. alumite). The aluminum oxide layer 64 makes it harder to damage the aluminum substrate 10. If the aluminum substrate 10 is damaged, the reflectance of the aluminum substrate 10 will be less than a desirable value, whereby no uniform reflectance will be obtained within the surface of the aluminum substrate 10. Whether the aluminum substrate 10 is damaged or not can be inspected visually, for example. The aluminum oxide layer 64 may be formed on the aluminum substrate 10 on only one side to be formed with the scintillator 40, on both sides of the aluminum substrate 10, or such as to cover the aluminum substrate 10 as a whole. Forming the aluminum oxide layer 64 on both sides of the aluminum substrate 10 can reduce the warpage and flexure of the aluminum substrate 10, and thus can prevent the scintillator 40 from being unevenly vapor-deposited. Forming the aluminum oxide layer 64 can also erase streaks occurring when forming the aluminum substrate 10 by rolling. Therefore, even when a reflecting film (metal film 68 and oxide layer 70) is formed on the aluminum substrate 10, a uniform reflectance can be obtained within the surface of the aluminum substrate 10 in the reflecting film. Preferably, the thickness of the aluminum oxide layer 64 is 10 to 5000 nm. When the thickness of the aluminum oxide layer 64 is less than 10 nm, the damage prevention effect of the aluminum substrate 10 tends to decrease. When the thickness of the aluminum oxide layer 64 exceeds 5000 nm, the aluminum oxide layer 64 tends to peel off in particular in corner parts of the aluminum substrate 10, thereby causing large cracks in the aluminum oxide layer 64 and deteriorating the moisture resistance of the aluminum oxide layer 64. In one example, the thickness of the aluminum oxide layer 64 is 1000 nm. The thickness of the aluminum oxide layer 64 is appropriately determined according to the size and thickness of the aluminum substrate 10.

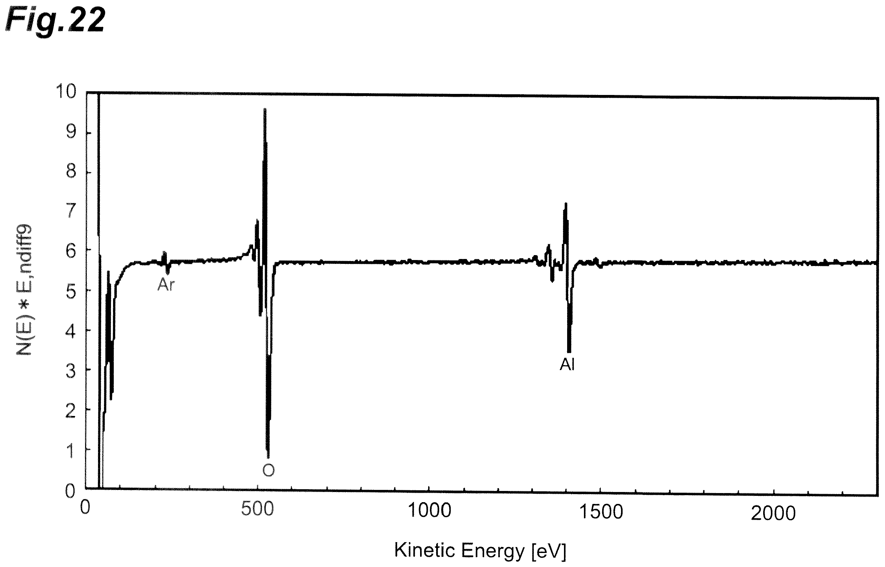

Fig. 22 is a graph showing an example of AES spectrum of the aluminum oxide layer in this scintillator panel. This example conducts an element analysis in the thickness direction of the aluminum oxide layer 64 by sputter-etching the aluminum oxide layer 64 with argon ions for 31 minutes. In this case, aluminum, oxygen, and argon are detected. Here, argon derives from the argon ions at the time of sputter etching, and thus is not an element contained in the aluminum oxide layer 64. Therefore, the aluminum oxide layer 64 in this example contains aluminum and oxygen.

Reference will be made to Figs. 20 and 21 again. The intermediate film 66 and protective films 30 and 50 are organic or inorganic films, which may be made of materials different from each other or the same material. The intermediate film 66 and protective films 22 and 26 are made of polyparaxylylene or the like such as the first example. In one example, the intermediate film 66 and protective films 22 and 26 have a thickness of 10 µm each. The intermediate film 66 reduces minute irregularities of the aluminum oxide layer 64, thereby advantageously acting for forming the metal film 68 having a uniform thickness on the aluminum oxide layer 64.

The metal film 68 is constructed by Al, for example, but may also be made of Ag, Cr, Cu, Ni, Ti, Mg, Rh, Pt, Au, or the like. Among them, or Ag is preferred. The metal film 68 may also contain elements such as oxygen other than metal elements. The metal film 68 may be constituted by a plurality of metal films, e.g., a Cr film and an Au film provided on the Cr film. Preferably, the thickness of the metal film 68 is 50 to 200 nm. In one example, the thickness of the metal film 68 is 70 nm.

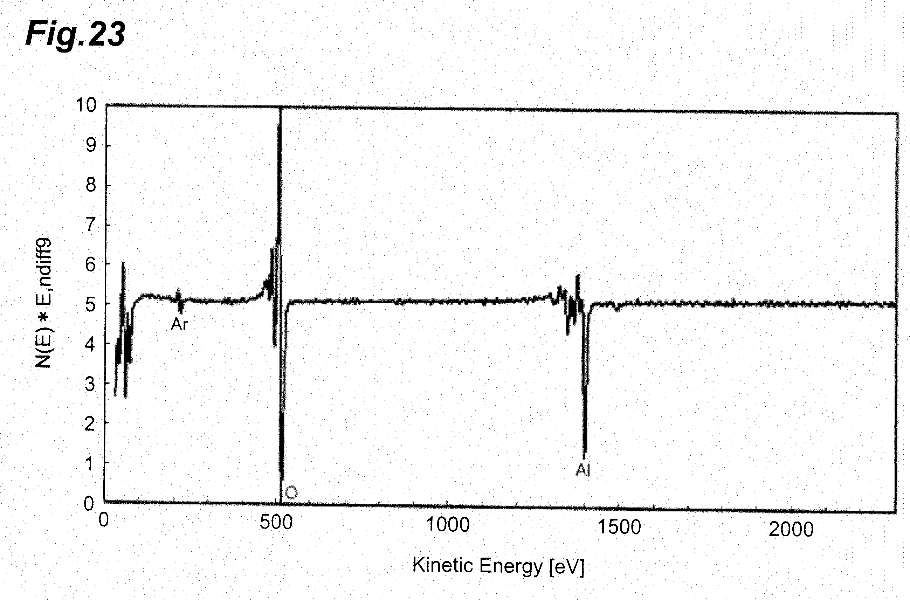

Fig. 23 is a graph showing an example of AES spectrum of the metal film in this scintillator panel. This example conducts an element analysis in the thickness direction of the metal layer 18 by sputter-etching the metal film 68 with argon ions for 20 minutes. In this case, aluminum, oxygen, and argon are detected. Here, argon derives from the argon ions at the time of sputter etching, and is not an element contained in the metal film 68. Though containing oxygen, the metal film 68 can clearly be distinguished from the aluminum oxide layer 64 in view of their AES spectra forms.

Reference will be made to Figs. 20 and 21 again. The oxide layer 70 is made of a metal oxide, SiO₂, TiO₂, or the like, for example. The oxide layer 70 may be constituted by a plurality of oxide layers made of materials different from each other, e.g., an SiO₂ film and a TiO₂ film. In one example, the thickness of the SiO₂ film is 80 nm while the thickness of the TiO₂ film is 50 nm. The thickness and number of laminated layers of the SiO₂ and TiO₂ films are determined in view of the reflectance for the wavelength of light 92 emitted from the scintillator 40. The oxide layer 70 also functions to prevent the metal film 68 from corroding. The scintillator 40 has a same structure as the scintillator 40 of the first example.

As explained in the foregoing, the scintillator panel 110 comprises the aluminum substrate 10; the aluminum oxide layer 64 formed on the surface of the aluminum substrate 10; the metal film 68, provided on the aluminum oxide layer 64, having a radiation transparency and a light reflectivity; the protective film 30 covering the metal film 68 and having a radiation transparency and a light transparency; and the scintillator 40 provided on the protective film 30. Therefore, the light 92 emitted from the scintillator 40 is reflected by the metal film 68, whereby the scintillator panel 110 can attain a high luminance. Since the metal film 68 and protective film 30 are provided between the aluminum oxide layer 64 and scintillator 40, the aluminum substrate 10 and scintillator 40 can be kept from reacting with each other even if the aluminum oxide layer 64 is formed with cracks, pinholes, and the like. As a consequence, the aluminum substrate 10 can be prevented from corroding. Forming the aluminum oxide layer 64 can further erase damages to the surface of the aluminum substrate 10, whereby uniform luminance and resolution characteristics can be obtained within the surface of the scintillator panel 10.

The scintillator panel 110 further comprises the radiation-transparent intermediate film 66 provided between the aluminum oxide layer 64 and metal film 68. This can flatten the surface of the aluminum oxide layer 64, thereby improving the flatness of the metal film 68. Therefore, the in-surface uniformity in reflectance of the metal film 68 improves. It can also enhance the adhesion between the aluminum oxide layer 64 and metal film 68. It can further prevent moisture, scintillator constituent materials, and the like from passing through cracks, pinholes, and the like formed in the aluminum oxide layer 64. Therefore, the aluminum substrate 10 is further prevented from corroding.

The scintillator panel 110 further comprises the oxide layer 70 covering the metal film 68 and having a radiation transparency and a light transparency. This can improve the moisture resistance of the metal film 68 and prevent the metal film 68 from being damaged. It can also enhance the reflectance of the metal film 68.

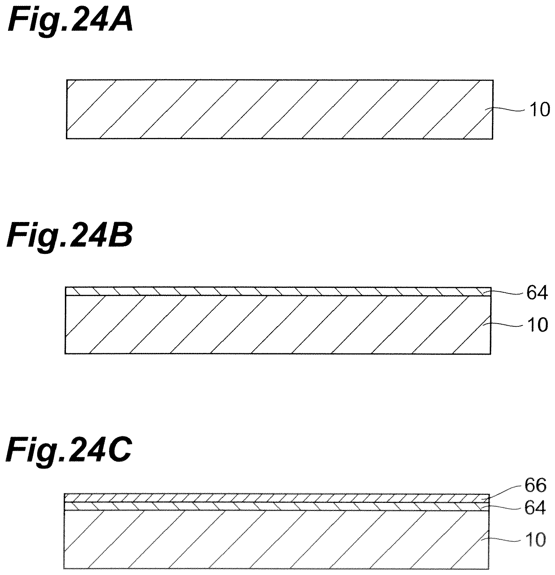

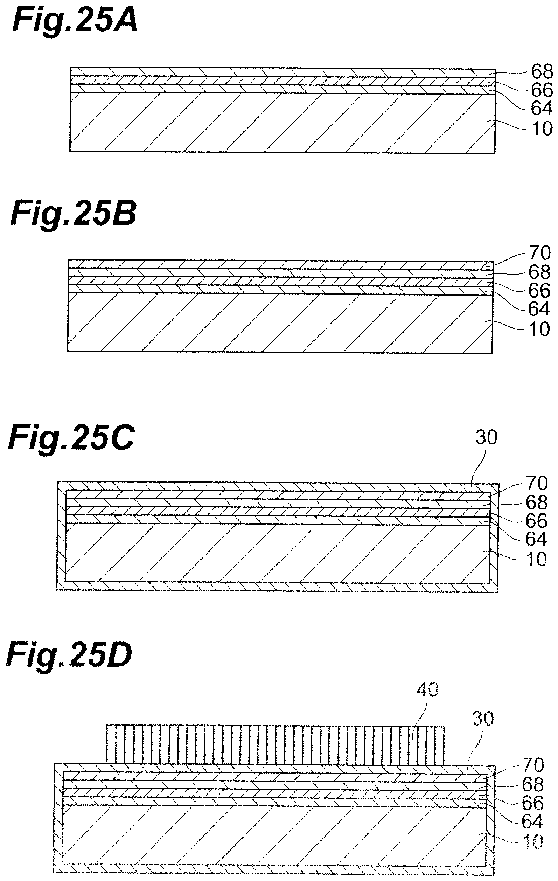

The method of manufacturing the scintillator panel 110 will now be explained with reference to Figs. 24A to 24C and 25A to 25D. First, as shown in Fig. 24A, the aluminum substrate 10 is prepared. Subsequently, as shown in Fig. 24B, the aluminum oxide layer 64 is formed by anodic oxidation on a surface of the aluminum substrate 10. For example, the aluminum substrate 10 is electrolyzed by an anode in an electrolyte such as dilute sulfuric acid, so as to be oxidized. This forms the aluminum oxide layer 64 constituted by an assembly of hexagonal columnar cells each having a fine hole at the center. The aluminum oxide layer 64 may be dipped in a dye, so as to be colored. This can improve the resolution or enhance the luminance. After being formed, the aluminum oxide layer 64 is subjected to a sealing process for filling the fine holes.

Next, as shown in Fig. 24C, the intermediate film 66 is formed on the aluminum oxide layer 64 by using CVD. Further, as shown in Fig. 25A, the metal film 68 is formed on the intermediate film 66 by using vacuum vapor deposition. The metal film 68 is made of aluminum having a purity of 99.9%, for example. Thereafter, as shown in Fig. 25B, the oxide layer 70 is formed on the metal film 68. Next, as shown in Fig. 25C, the protective film 30 is formed by using CVD so as to seal the aluminum substrate 10, aluminum oxide layer 64, intermediate film 66, metal film 68, and oxide layer 70 as a whole. Further, as shown in Fig. 25D, the scintillator 40 is formed on the protective film 30 on the oxide layer 70 by using vapor deposition. Subsequently, as shown in Figs. 20 and 21, the protective film 50 is formed by using CVD so as to seal the aluminum substrate 10, aluminum oxide layer 64, intermediate film 66, metal film 68, oxide layer 70, protective film 30, and scintillator 40 as a whole. Thus, the scintillator panel 110 is manufactured. The sealing with the protective films 22 and 26 can be realized as the sealing process of the first example.

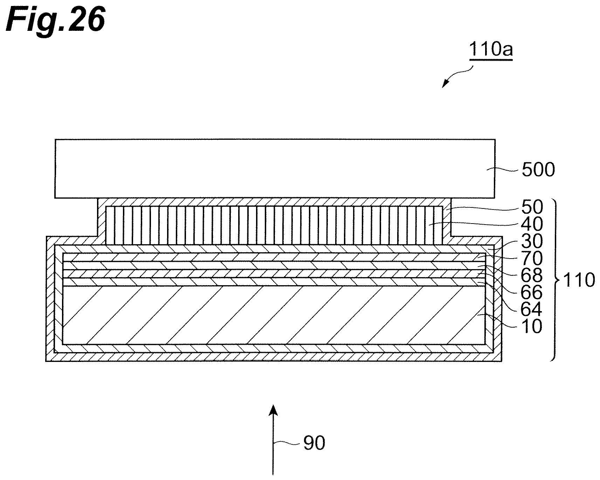

Fig. 26 is a view showing an example of radiation image sensor including this scintillator panel. The radiation image sensor 110a shown in Fig. 26 comprises the scintillator panel 110, and an image pickup device 500 which is arranged so as to oppose the scintillator panel 110 as radiation image sensor 600 shown in Fig. 6 and adapted to convert light emitted from the scintillator 40 into an electric signal.

The radiation image sensor 100a comprises the scintillator panel 110 and the image pickup device 70 adapted to convert the light 92 emitted from the scintillator 40 of the scintillator panel 110 into the electric signal. Therefore, the radiation image sensor 100a can prevent the aluminum substrate 10 from corroding, while having a high luminance.

### (Seventh Embodiment)

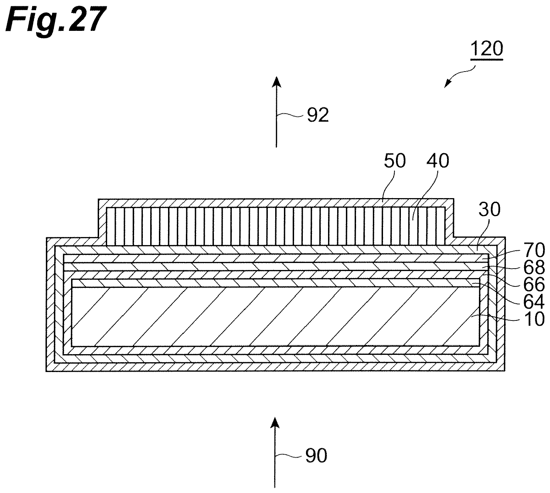

Fig. 27 is a sectional view schematically showing the scintillator panel in accordance with a seventh embodiment. The scintillator panel 120 shown in Fig. 27 has the same structure as that of the scintillator panel 110 except that the intermediate film 66 totally seals the aluminum substrate 10 and aluminum oxide layer 64. Therefore, the scintillator panel 120 not only exhibits the same operations and effects as those of the scintillator 110, but further improves the moisture resistance of the aluminum substrate 10, and thus can more reliably prevent the aluminum substrate 10 from corroding.

### (Eighth Embodiment)

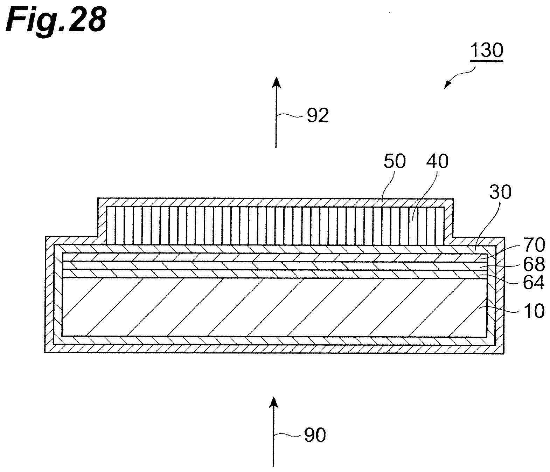

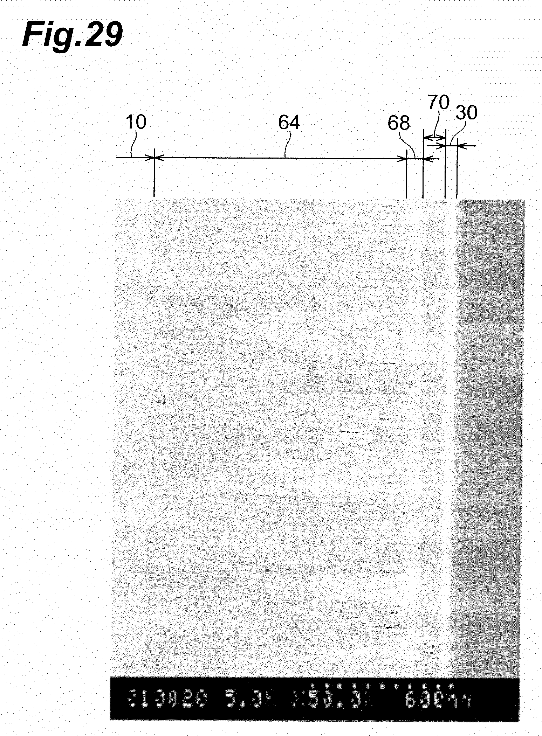

Fig. 28 is a sectional view schematically showing the scintillator panel in accordance with an eighth embodiment. The scintillator panel 130 shown in Fig. 28 has the same structure as that of the scintillator panel 110 except that it lacks the intermediate film 66. Therefore, the scintillator panel 130 not only exhibits the same operations and effects as those of the scintillator panel 100 but can also simplify the structure. Fig. 29 is a cross-sectional SEM photograph of an example of this scintillator panel.

When forming the metal film 68 on the aluminum oxide layer 64, the thickness of the metal film 68 is preferably 50 to 200 nm in view of a uniform reflection characteristic, adhesion strength, and the like of the metal film 68. Preferably, for keeping the surface state of the aluminum substrate 10 from affecting the metal film 68, the thickness of the aluminum oxide layer 64 is greater than that of the metal film 68. In one example, the thickness of the aluminum oxide layer 64 is 1000 nm.

### (Ninth Illustrative Example)

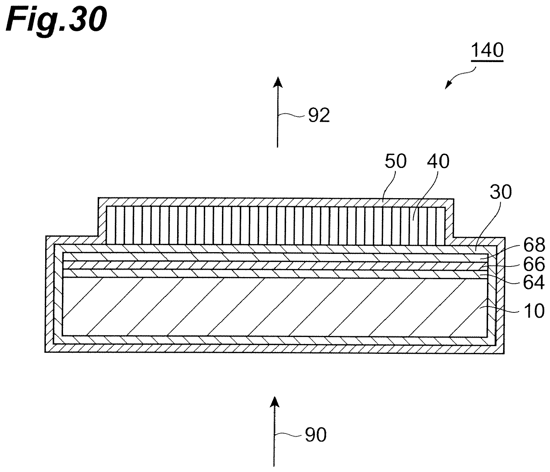

Fig. 30 is a sectional view schematically showing the scintillator panel in accordance with a ninth illustrative example. The scintillator panel 140 shown in Fig. 30 has the same structure as that of the scintillator panel 110 except that it lacks the oxide layer 70. Therefore, the scintillator panel 140 not only exhibits the same operations and effects as those of the scintillator panel 110, but can also simplify the structure.

### (Tenth Illustrative Example)

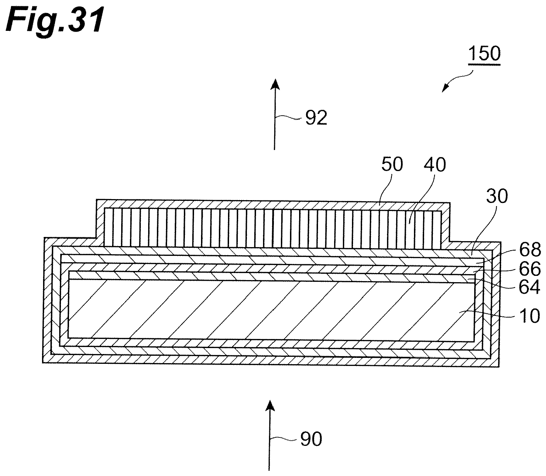

Fig. 31 is a sectional view schematically showing the scintillator panel in accordance with a tenth illustrative example. The scintillator panel 150 shown in Fig. 31 has the same structure as that of the scintillator panel 140 except that the intermediate film 66 totally seals the aluminum substrate 10 and aluminum oxide layer 64. Therefore, the scintillator panel 150 not only exhibits the same operations and effects as those of the scintillator 140, but further improves the moisture resistance of the aluminum substrate 10, and thus can more reliably prevent the aluminum substrate 10 from corroding.

### (Eleventh Embodiment)

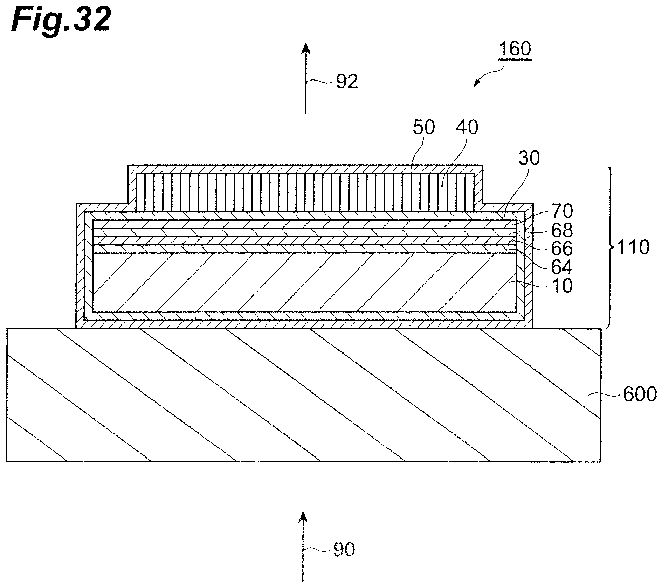

Fig. 32 is a sectional view schematically showing the scintillator panel in accordance with a eleventh embodiment. The scintillator panel 160 shown in Fig. 32 further comprises a radiation-transparent reinforcement plate 600 bonded to the aluminum substrate 10 in addition to the structure of the scintillator panel 110. The aluminum substrate 10 is arranged between the reinforcement plate 600 and scintillator 40.

The reinforcement plate 600 is bonded to the aluminum substrate 10 by a double-sided adhesive tape, an adhesive, or the like, for example. Employable as the reinforcement plate 600 are (1) carbon fiber reinforced plastics (CFRP), (2) carbon boards (made by carbonizing and solidifying charcoal and paper), (3) carbon substrates (graphite substrates), (4) plastic substrates, (5) sandwiches of thinly formed substrates (1) to (4) mentioned above with resin foam, and the like. Preferably, the thickness of the reinforcement plate 600 is greater than the total thickness of the aluminum substrate 10 and aluminum oxide layer 64. This improves the strength of the scintillator panel 160 as a whole. Preferably, the reinforcement plate 600 is larger than the scintillator 40 when seen in the thickness direction of the aluminum substrate 10. Namely, it will be preferred if the reinforcement plate 600 hides the scintillator 40 when seen in the thickness direction of the aluminum substrate 10 from the reinforcement plate 600 side. This can prevent a shadow of the reinforcement plate 600 from being projected. In particular, this can prevent an image from becoming uneven because of the shadow of the reinforcement plate 600 when the radiation image 90 having a low energy is used.

The scintillator panel 160 not only exhibits the same operations and effects as those of the scintillator panel 110, but can further improve the flatness and rigidity. Therefore, the scintillator panel 160 can prevent the scintillator 40 from peeling off as the aluminum substrate 10 bends. Since the radiation image sensor 100 shown in Fig. 7 uses the scintillator panel as a single unit, it is effective to employ the scintillator panel 160 having a high rigidity.

The reinforcement plate 600 may be bonded to one of the scintillator panels 120, 130 and 140 instead of the scintillator panel 110.

The present invention is not limited to the configurations of the above embodiments, and also includes combinations of the respective embodiments and replacements thereof, etc. For example, in the third and fourth examples, the substrate may be replaced by a substrate made of a metal other than aluminum, and further, this can be replaced by another radiation-transmissive substrate such as an amorphous carbon substrate, a silicon substrate, or a glass substrate.

In the above embodiments, SiO₂ has been used as the material of the first layer (low-refractive index layer) of the dielectric film layers, and as the material of the second layer (high-refractive index layer), TiO₂, however, other materials may be used. As the material of the high-refractive index layer, a material containing at least one of the materials including TiO₂ as well as Nb₂O₅ Ta₂O₅, HfO₂, and ZrO₂ can be used, for example.

In addition, stability of the metal reflection film may be improved by, for example, providing an inorganic or organic film such as an oxide film between the substrate and metal reflection film. As a method for forming an oxide film, besides a method for forming an oxide film on the substrate by vapor deposition or the like, if the substrate is made of a metal, an oxide film may be formed by oxidizing the substrate surface.

Although the scintillator panel has herein been exemplified as a radiation image converting panel, a photostimulable phosphor such as CsBr doped with Eu may be used as a converting portion that converts a radiation image to an optical image to replace the scintillator. A radiation image is once converted by the photostimulable phosphor to a latent image, and a visible optical image can be read out by scanning this latent image with a laser light. The visible optical image thus read out is detected by various photodetectors such as, for example, a line sensor, an image sensor, and a photomultiplier.

## Claims

1. A radiation image converting panel including a converting portion that converts a radiation image to an optical image on a support,
the support comprising:
an aluminum substrate (10);
an aluminum oxide layer (64) formed on a surface of the aluminum substrate (10);
a metal film (68), provided on the aluminum oxide layer (64), having a radiation transparency and a light reflectivity;
an oxide layer (70) covering the metal film (68) and having a radiation transparency and a light transparency; and
a protective film (30) having a radiation transparency and a light transparency, **characterized in that** the protective film is totally sealing the aluminum substrate (10), the aluminum oxide layer (64), the metal film (68) and the oxide layer (70).

2. The radiation image converting panel according to claim 1, wherein said converting portion is a scintillator (40) composed of a plurality of needle crystals.

3. The radiation image converting panel according to claim 1, further comprising a radiation-transparent intermediate film (66) provided between the aluminum oxide layer (64) and the metal film (68).

4. The radiation image converting panel according to claim 2, further comprising a radiation-transparent reinforcement plate bonded to the aluminum substrate (10), the aluminum substrate (10) being arranged between the reinforcement plate and the scintillator (40).

5. The radiation image converting panel according to claim 1, wherein said oxide layer (70) is comprised of a plurality of layers made of different materials from each other.

6. The radiation image converting panel according to claim 5, wherein said oxide layer (70) is comprised of SiO₂ layer and TiO₂ layer.

7. A radiation image sensor comprising:
a radiation image converting panel according to any one of claims 1 to 6; and
an image pickup device that converts an optical image outputted from the converting portion to an electrical signal.

## Patentansprüche

1. Strahlungsbildumwandlungsplatte mit einem Umwandlungsabschnitt, der ein Strahlungsbild in ein optisches Bild auf einem Träger umwandelt,
wobei der Träger umfasst:
ein Aluminiumsubstrat (10);
eine Aluminiumoxidschicht (64), die auf einer Oberfläche des Aluminiumsubstrats (10) gebildet ist;
einen Metallfilm (68), bereitgestellt auf der Aluminiumoxidschicht (64), mit einer Strahlungsdurchlässigkeit und einem Lichtreflexionsvermögen;
eine Oxidschicht (70), die den Metallfilm (68) bedeckt und eine Strahlungsdurchlässigkeit und eine Lichtdurchlässigkeit aufweist; und
einen Schutzfilm (30), der eine Strahlungsdurchlässigkeit und eine Lichtdurchlässigkeit aufweist,
**dadurch gekennzeichnet, dass**
der Schutzfilm das Aluminiumsubstrat (10), die Aluminiumoxidschicht (64), den Metallfilm (68) und die Oxidschicht (70) vollständig abdeckt.

2. Strahlungsbildumwandlungsplatte nach Anspruch 1, wobei der Umwandlungsabschnitt ein Szintillator (40) ist, der aus einer Vielzahl von Nadelkristallen besteht.

3. Strahlungsbildumwandlungsplatte nach Anspruch 1, des Weiteren umfassend einen strahlendurchlässigen Zwischenfilm (66), der zwischen der Aluminiumoxidschicht (64) und dem Metallfilm (68) bereitgestellt ist.

4. Strahlungsbildumwandlungsplatte nach Anspruch 2, des Weiteren umfassend eine strahlendurchlässige Verstärkungsplatte, die mit dem Aluminiumsubstrat (10) verbunden ist, wobei das Aluminiumsubstrat (10) zwischen der Verstärkungsplatte und dem Szintillator (40) angeordnet ist.

5. Strahlungsbildumwandlungsplatte nach Anspruch 1, wobei die Oxidschicht (70) aus einer Vielzahl von Schichten besteht, die aus voneinander verschiedenen Materialien hergestellt sind.

6. Strahlungsbildumwandlungsplatte nach Anspruch 5, wobei die Oxidschicht (70) aus einer SiO₂-Schich und einer TiO₂-Schich besteht.

7. Strahlungsbildsensor, umfassend:
eine Strahlungsbildumwandlungsplatte nach einem der Ansprüche 1 bis 6; und
eine Bildaufnahmevorrichtung, die ein von dem Umwandlungsabschnitt ausgegebenes optisches Bild in ein elektrisches Signal umwandelt.

## Revendications

1. Panneau de conversion d'images de radiation incluant une portion de conversion qui convertit une image de radiation en une image optique sur un support,
le support comprenant :
un substrat en aluminium (10) ;
une couche d'oxyde d'aluminium (64) formée sur une surface du substrat en aluminium (10) ;
un film métallique (68) pourvu sur la couche d'oxyde d'aluminium (64) et présentant une transparence aux radiations et une réflectivité à la lumière ;
une couche d'oxyde (70) qui recouvre le film métallique (68) et présentant une transparence aux radiations et une transparence à la lumière ; et
un film de protection (30) présentant une transparence aux radiations et une transparence à la lumière, **caractérisé en ce que** le film de protection scelle totalement le substrat en aluminium (10), la couche d'oxyde d'aluminium (64), le film métallique (68) et la couche d'oxyde (70).

2. Panneau de conversion d'images de radiation selon la revendication 1, dans lequel ladite portion de conversion est un scintillateur (40) composé d'une pluralité de cristaux en forme d'aiguille.

3. Panneau de conversion d'images de radiation selon la revendication 1, comprenant en outre un film intermédiaire transparent aux radiations (66) pourvu entre la couche d'oxyde d'aluminium (64) et le film métallique (68).

4. Panneau de conversion d'images de radiation selon la revendication 2, comprenant en outre une plaque de renfort transparente aux radiations collée au substrat en aluminium (10), le substrat en aluminium (10) étant agencé entre la plaque de renfort et le scintillateur (40).

5. Panneau de conversion d'images de radiation selon la revendication 1, dans lequel ladite couche d'oxyde (70) est constituée d'une pluralité de couches constituées de matériaux différents.

6. Panneau de conversion d'images de radiation selon la revendication 5, dans lequel ladite couche d'oxyde (70) est constituée d'une couche de SiO₂ et d'une couche de TiO₂.

7. Capteur d'images de radiation comprenant :
un panneau de conversion d'images de radiation selon l'une quelconque des revendications 1 à 6 ; et
un dispositif de saisie d'images qui convertit une image optique sortie par la portion de conversion en un signal électrique.
